# EUROPEAN PATENT APPLICATION

(11) **EP 4 495 903 A1**
(43) Date of publication of application: **22.01.2025**
(21) Application number: 23186916.5
(22) Date of filing: 21.07.2023
(51) Int. Cl.: G07C 9/00, G07C 9/27, G07C 9/38, E05B 65/10, G05B 15/02

(54) **METHOD FOR CONTROLLING A BUILDING MANAGEMENT SYSTEM, COMPUTER PROGRAM, AND BUILDING MANAGEMENT SYSTEM**

(71) Applicant: dormakaba Schweiz AG, 8623 Wetzikon (CH)
(72) Inventor: Michel, François, 3963 Crans-Montana (CH); Rappel, Christian, 8006 Zürich (CH)
(74) Representative: Balder IP Law, S.L.

(57) **Abstract**

The invention relates to a method 200 for controlling a building management system, hereinafter referred to as BMS 1, for a building, the BMS 1 comprising several access gate entities, hereinafter referred to as AGEs 10; each AGE 10 controlling at least one access gate, in particular a door, a gate, a turnstile, or another barrier; and a BMS controller 2 with a data link 3 to each AGE 10,the method 200 comprising: determining 201 a default AGE-configuration for each AGE 10 within the BMS controller 2, monitoring 202, by the BMS-controller 2, the AGEs 10 for detecting possible dysfunctions at the AGEs 10, and if a predetermined dysfunction is detected at one of the AGEs 10, hereinafter referred to as first AGE 10, changing 203 by the BMS-controller at least another one of the AGEs 10, hereinafter referred to as second AGE 10, from the default AGE-configuration to a special AGE-configuration.

## Description

The invention concerns a method for controlling a building management system, hereinafter referred to as BMS, for a building. Further, the invention concerns a computer program and concerns the BMS adapted to carry out the method.

In buildings, many different types of access gates, e.g. doors, are used, each of which must fulfill certain functions. For example, the access gates must open an escape route if necessary or may only allow certain groups of people to enter.

It is the object of the present invention to provide a method, a computer program and a BMS that enable safe operation of a building; in particular, reliably provide escape routes and maintain access restrictions.

The features of the independent claims solve the object of the invention. The dependent claims provide advantages embodiments of the invention.

So, the object is solved by a method for controlling a building management system, hereinafter referred to as BMS, for a building. The term "BMS for a building" is to be understood broadly and describes preferably the use of the BMS for access gates directly in buildings as well for access gates in enclosures, for example in fences or walls.

The BMS comprises several access gate entities, hereinafter referred to as AGEs. Each AGE controlling, and preferably comprising, at least one access gate, in particular a door, a gate, a turnstile, or another barrier.

Further, the BMS comprises a BMS controller (building management system controller) with a data link to each AGE. The BMS controller can be located in the same building as the AGEs. However, the BMS controller can also be located partially or completely outside the building and connected to the AGEs, e.g. via the Internet. The BMS controller can be implemented as a virtual server and/or via a cloud solution. The data link between the BMS controller and the AGE can be completely wired, can be completely wireless, or can be partially wired and partially wireless.

The method comprises the step of determining with the BMS controller a default AGE-configuration for each AGE.

"Determining the default AGE-configuration" describes that the default AGE-configuration must be known to the BMS controller. This is done, for example, by the BMS controller specifying (e.g. uploading) the default AGE-configuration to the AGE and/or by the BMS controller reading the default AGE- configuration from the AGE.

The AGE-configuration defines the behavior of the AGE according to the function assigned to it. Purely as an example, the following function can be assigned to the access gate controlled by the AGE: "locked access gate that is to be accessible in an emergency and by authorized persons". According to this example, the AGE-configuration ensures that the door is normally blocked (e.g. by means of a door buzzer), that the access gate can be opened in an emergency (e.g. when an emergency open button is pressed), and that the door can be opened by authorized persons (e.g. with a key card).

Further, the method comprises the step of monitoring, by the BMS-controller, the AGEs for detecting possible dysfunctions at the AGEs.

The term "dysfunction" means, that the corresponding component of the AGE and/or the access gate controlled by the AGE partially does not work or completely does not work or works differently than intended. The "dysfunction" can be temporary or permanent.

The term "dysfunctions at the AGE" means that the detected dysfunction can occur in the AGE and/or at the access gate controlled by the AGE. Various electrical and electronic components of the AGE can supply data to the BMS controller on the basis of which a dysfunction can be detected. Also absence of certain data can indicate a dysfunction. Furthermore, the AGE can have sensors for monitoring the access gate, which can provide data for detecting a dysfunction of the access gate - for example, it can be detected whether a door is open although it should be closed. It can e.g. be a dysfunction within the meaning of the invention if a door is blocked by an object and can therefore no longer be closed.

According to the method, if a predetermined dysfunction is detected at one of the AGEs, hereinafter referred to as first AGE, the BMS controller changes at least another one of the AGEs, hereinafter referred to as second AGE, from the default AGE-configuration to a special AGE-configuration. As mentioned above, the AGE-configurations define the behavior of the AGE according to the function assigned to it. It is provided that the default AGE-configuration and the special AGE-configuration are at least partially different from each other.

The invention thus makes it possible to respond to a dysfunction of an AGE (first AGE), for example to cover the time until the broken AGE is repaired. By changing the AGE-configuration of a second AGE, the second AGE can at least partially take over the function of the first AGE - e.g. providing an escape route or access control. Therefore, present invention provides a method that enable safe operation of a building; in particular, reliably provides escape routes and maintains access restrictions.

The term "predetermined dysfunction" describes that the change described herein does not have to take place for every dysfunction, but only for at least one predefined dysfunction, which characteristics are preferably stored in the BMS controller.

According to the invention, the BMS controller changes at least one of the AGEs; for the sake of simplicity, the present document describes mostly that the configuration of one second AGE is changed. However, it is always preferably provided that other AGEs, also referred to as second AGEs, are changed in their configurations.

Preferably, the special AGE-configuration is adapted for the second AGE to compensate the predetermined dysfunction of the first AGE, in particular to replace the function of the access gate controlled by first AGE by the access gate controlled by second AGE.

For example, a first AGE controls a first access gate that is intended as an escape route. The access gate of the first AGE is relatively large/wide. A second AGE controls a second access gate that allows escape from the same zone as the first access gate - but is, e.g., smaller/narrower or the escape route is longer. In this examplary constellation, the second AGE with its second access gate cannot completely replace the function of the first AGE with its first access gate, but it can at least compensate for it.

According to another example, there may also be two AGEs in a building with similar access gates at similar positions. In this case, it is possible to replace the function of the access gate controlled by first AGE by the access gate controlled by second AGE.

Preferably, the special AGE-configuration causes the access gate controlled by second AGE to be locked or unlocked. For example, the first AGE with the first access gate is located in a first zone of the building. The first zone is surrounded by a second zone, and the second AGE with second access gate is located in the second zone. In this example, the first access gate is supposed to be locked - but exhibits a dysfunction such that the locked state is no longer present or at least no longer verifiable. In this case, the special AGE-configuration of the second AGE can cause the access gate controlled by second AGE to be locked. This locks the second zone, and thus also the inner first zone. The second zone in this example does not have to surround the first zone, but can also be arranged in such a way that the second zone must be passed in order to reach the first zone.

On the other hand, in the case of escape routes, for example, it may be necessary that the special AGE-configuration causes the access gate controlled by second AGE to be unlocked, in order to open an alternative escape route.

Preferably, the special AGE-configuration causes the second AGE to change the access restriction level, in particular by changing the authentication method and/or adding an additional authentication method and/or changing the access-permitted user group. In the above example, the locking state of the access gate of the first AGE (in the first zone) can no longer be ensured. To compensate for this functionality - in the best case to replace it - the access restriction level can be changed at the second AGE, because the access gate controlled by second AGE must be passed to reach the first zone.

Thereby, changing the authentication method means for example to require a biometric identification instead of a simple keycard, which raises the access restriction level; or to change from one biometric identification method to another biometric identification method.

Likewise, for a raise of the access restriction level, the special AGE-configuration of the second AGE can stipulate that additional authentication method is required to pass through the access gate. For example, a biometric identification may be required in addition to a keycard.

Further, the special AGE-configuration can causes the second AGE to change the access restriction level by changing the access-permitted user group. Assume that in the above example, a high-trust user group is allowed in the first zone and a mid-trust user group is allowed in the second zone. If the locking state of the first zone can no longer be guaranteed, the special AGE-configuration can causes the second AGE to change the access restriction level by changing the access-permitted user group from mid-trust to high-trust. This allows only the high-trust user group to enter the second zone, which must be passed to enter the first zone.

Preferably, the special AGE-configuration causes the second AGE to issue a visual or audible message, preferable a message related to the dysfunction. For this purpose, a device is preferably provided which is designed to output the message. The device can be integrated in the AGE or connected to it in a data-transmitting manner. The message can be a simple indication, e.g. a sound or a light. However, the message may also indicate, by means of acoustically or visually perceptible text and/or symbols, that there is a change of function at the access gate controlled by the second AGE and/or that there is a dysfunction at the access gate controlled by the first AGE.

Preferably, the BMS controller automatically changes the second AGE from the default AGE-configuration to the special AGE-configuration, if detecting the dysfunction of the first AGE. Preferably, this automatic change does not take place with every dysfunction, but only with if detecting a specific dysfunction from a variety of possible dysfunctions of the first AGE. Preferably, the specific dysfunction is predefined.

Preferably, the term "the BMS controller automatically changes the second AGE from the default AGE-configuration to the special AGE-configuration" describes a "fully automatically change", wherein the BMS controller changes the configuration without any involvement of a person.

Equally advantageous, the term "the BMS controller automatically changes the second AGE from the default AGE-configuration to the special AGE-configuration" describes a "semi-automatically change", wherein the BMS controller proposes one or more second AGE(s), each with at least one possible special AGE-configuration. Thereby it is particularly provided that a person operating the BMS can select the one or more second AGE(s) to be changed. Further, it is particularly provided that the person can select at least one special AGE-configuration. Even if there is only one second AGE with only one special AGE-configuration to choose from, a selection can be made because the selection can be to change no second AGE at all.

It is also provided that for certain AGEs (which is a "first AGE" if dysfunctional) and/or for certain dysfunctions of the AGE, the fully automatically change can be set, whereby at the same time and in the same BMS the semi-automatically change can be set for other AGEs (which is a "first AGE" if dysfunctional) and/or other dysfunctions of the same AGE.

Preferably, for at least one AGE - which is the "first AGE" if dysfunctional -, at least one further AGE is predetermined in the BMS controller as "second AGE" with at least one associated special AGE-configuration. The BMS controller thus stores information about which AGE with which special AGE-configuration can serve as the second AGE.

Preferably, for at least one AGE - which is the "first AGE" if dysfunctional -, a plurality of possible dysfunctions are predetermined in the BMS controller. For each of the possible predetermined dysfunctions at least one further AGE is predetermined in the BMS-controller as "second AGE", preferably with at least one associated special AGE-configuration per second AGE.

In detail, the BMS controller can react depending on the respective dysfunction. The term dysfunction of a first/second kind is used to refer to different dysfunctions. For example, a dysfunction of first kind can be a defect of the door drive and a dysfunction of second kind can be a defect of a fingerprint sensor. The defect of the door drive can have as a consequence that the access gate is no longer handicapped accessible, whereas the default of the fingerprint sensor affects the access control. This shows that, depending on the kind of dysfunction, different access gates and/or different AGE-configuration may have to be uses for compensation.

Therefore, the method preferably includes the following specification:
Case A: if a predetermined dysfunction of a first kind is detected at the first AGE, the BMS controller changes the second AGE from the default AGE-configuration to the special AGE-configuration.
Case B: if a predetermined dysfunction of a second kind is detected at the same first AGE (which is the same first AGE as in case A), the BMS-controller at least:
   (i) changes a different second AGE (which is different from the second AGE in case A) from the default AGE-configuration to a special AGE-configuration, and/or
   (ii) changes the same AGE (which is the same second AGE as in case A) from the default AGE-configuration to a different special AGE-configuration (which is different from the AGE-configuration in case A).

A specific use case preferably provides following feature of the method: If detected at the first AGE that the access gate controlled by first AGE can no longer be opened, the second AGE is changed from the default AGE-configuration to the special AGE-configuration causing the second AGE to activate a passage function, in particular an emergency exit function. In this case, the predetermined dysfunction is: "the access gate controlled by first AGE can no longer be opened". This can happen, for example, if the access gate is mechanically blocked, e.g. by an object in the door, or if a door drive or an emergency open button is out of order.

A further specific use case preferably provides following feature of the method: if detected at the first AGE - as the predetermined dysfunction - that the access restriction is dysfunctional, the second AGE is changed from the default AGE-configuration to the special AGE-configuration causing the second AGE to change the access restriction level, in particular to the access restriction level of the first AGE.

Preferably, the dysfunction of the AGE is detected by detecting that at least one component of the AGE is dysfunctional; in particular, wherein the AGE can comprise ono or more of following components, which can have a potential dysfunctionality:
AGE can comprise an AGE controller, which preferably represents the main electronic component of the AGE. At least the further components described in the following can be connected to the AGE controller. The AGE controller can control these components and/or receive data from these components. The AGE controller is preferably connected to the BMS controller via the data link for data exchange. This can be done wireless or by cable.

AGE can comprise an emergency open button, which is preferably designed to unlock an access gate of the AGE in case of emergency.

AGE can comprise a touch display configured for password and/or gesture code input, preferably in order to permit the person knowing the password/gesture to lock and/or unlock the access gate of the AGE.

AGE can comprise means for biometrical identification, preferably in order to identify a user or user group and in order to permit locking and/or unlocking of the access gate of the AGE. Preferably the means for biometrical identification comprise a camera adapted for facial recognition and/or a fingerprint sensor.

AGE can comprise an electronic-key reader, preferably in order to permit the owner of the electronic-key to lock and/or unlock the access gate of the AGE.

AGE can comprise a mechanical key operated switch (=switch operated by mechanical key), preferably in order to permit the owner of the mechanical key to lock and/or unlock the access gate of the AGE.

AGE can comprise a keypad configured for password input, preferably in order to permit the person knowing the password to lock and/or unlock the access gate of the AGE.

AGE can comprise a door lock, which is preferably electrically operable to unlock and/or lock the access gate.

AGE can comprise a door buzzer, which is preferably electrically operable to unlock and/or lock the access gate.

AGE can comprise a door closer (can also be referred to as access gate closer), which is designed to close a manually opened access gate. The door closer preferably comprises a hold-open function which can be controlled electrically and/or electronically and which may have a dysfunction. Additionally or alternatively, the door closer comprises a sensor that measures the access gate angle so that the position of the access gate can be detected. This sensor can also have a dysfunction.

AGE can comprise a door drive (can also be referred to as access gate drive). The door drive can open and/or close the access gate automatically. Preferably, the door drive is electrically controllable and/or comprises at least one sensor so that a dysfunction can be detected.

AGE can comprise a fire detector. The detector can send appropriate signals and/or respond to signals so that dysfunctions can be detected. Preferably, if the predetermined dysfunction is detected at the first AGE, the default AGE-configuration of the first AGE is changed, in particular by the BMS controller, to a fall-back AGE-configuration. Therefore, it is not necessary that all functionality is stopped at the first AGE, but the fall-back AGE-configuration can be used instead.

Preferably, the fall-back AGE-configuration causes the access gate controlled by first AGE to be locked or unlocked, and/or the first AGE to change the access restriction level.

Preferably, the fall-back AGE-configuration causes the first AGE to issue a visual or audible message, preferable a message related to the dysfunction, more preferable a message including an information for a user how to work around the dysfunction. For this purpose, a device is preferably provided which is designed to output the message. The device can be integrated in the AGE or connected to it in a data-transmitting manner. The message can be a simple indication, e.g. a sound or a light. However, the message may also indicate, by means of acoustically or visually perceptible text and/or symbols, that there is a change of function at the access gate controlled by the first AGE and/or that there is a dysfunction at the access gate controlled by the first AGE. And/or the message may give, by means of acoustically or visually perceptible text and/or symbols, information to a user how to work around the dysfunction; e.g. information about an alternative escape route via the access gate of the second AGE.

As already described, the building controlled by the BMS can have zones. These zones are defined in particular in the user software of the BMS. Any number of AGEs with associated access gates can be located at the boundaries of the zones. The zones can be adjacent and/or nested and/or overlapping. A single zone can be, for example, a fire protection section of the building or an area with special access restrictions.

Preferably, the first AGE is located in the border of a first zone of the building and the second AGE is located in the border of a second zone of the building. Preferably the first zone and the second zone are adjacent to each other or the second zone encloses the first zone. Alternatively, the first AGE and the second AGE are located in the border of the same zone of the building.

Preferably, the method provides that the BMS controller detects autonomously or by a user input that the dysfunction at the first AGE is fixed, whereupon the BMS controller, in particular automatically or semi-automatically, changes the second AGE from special AGE-configuration back to default AGE-configuration; and preferably changes the first AGE from fall-back AGE-configuration back to default AGE-configuration.

Preferably, the BMS controller can control at least one AGE depending on the temperature in the building and/or outside the building in such a way that the AGE leaves the associated access gate open only for a shorter time - shorter than in the normal state - when someone passes the access gate. This prevents excessive air exchange, which saves energy for heating or air conditioning systems.

Preferably, the BMS controller can control at least two AGEs in such a way that the associated access gates act as a sluice; this is useful, for example, if the security level has to be increased temporarily, e.g. for the visit of a person requiring special protection.

Preferably, the invention comprises a computer program comprising instructions which, when the program is executed on the BMS controller, cause the BMS controller to carry out the method according to any of the options described herein and/or defined in the claims. All of the optional features described for the method in description or claims are also preferably used within the computer program.

In particular, the computer program comprising instructions which, when the program is executed on the BMS controller, cause the BMS controller to:
Determining the default AGE-configuration for each AGE, monitoring the AGEs for detecting possible dysfunctions of the AGEs, and if a predetermined dysfunction is detected at one of the AGEs, hereinafter referred to as first AGE, changing at least another one of the AGEs, hereinafter referred to as second AGE, from the default AGE-configuration to a special AGE-configuration.

Preferably, the invention comprises the building management system (BMS) adapted to carry out the method according to any of the options described herein and/or defined in the claims. All of the optional features described for the method in description or claims are also preferably used within the device, namely the BMS.

The BMS comprising:
Several AGEs; each AGE controlling, preferably comprising, at least one access gate, in particular door, gate, turnstile, or other barrier. And a BMS controller with a data link to each AGE. The BMS-controller is adapted to: Determining a default AGE-configuration for each AGE, as described in the present document for the method according to the invention.

Monitoring the AGEs for detecting possible dysfunctions of the AGEs, as described in the present document for the method according to the invention.

And if a predetermined dysfunction is detected at one of the AGEs, changing at least another one of the AGEs, hereinafter referred to as second AGE, from the default AGE-configuration to a special AGE-configuration; as described in the present document for the method according to the invention.

The following describes the invention in more detail with reference to an embodiment.
Fig. 1 shows steps of the inventive method in accordance with an embodiment,
Fig. 2 shows a schematic view for explaining the inventive method in accordance with the embodiment and for illustrating the inventive building management system (BMS) in accordance with the embodiment, configured for carrying out the inventive method,
Fig. 3 shows a schematic view of a first setup of the inventive building management system (BMS) in accordance with the embodiment, configured for carrying out the inventive method,
Fig. 4 shows a schematic view of a second setup of the inventive building management system (BMS) in accordance with the embodiment, configured for carrying out the inventive method, and
Fig. 5 shows a schematic view of a third setup of the inventive building management system (BMS) in accordance with the embodiment, configured for carrying out the inventive method.

All explanations, optional features and other characteristics described above, in particular in the general part of the description, as well as the features described in the claims apply in particular to the embodiment - with regard to the method, to the computer program and to the BMS.

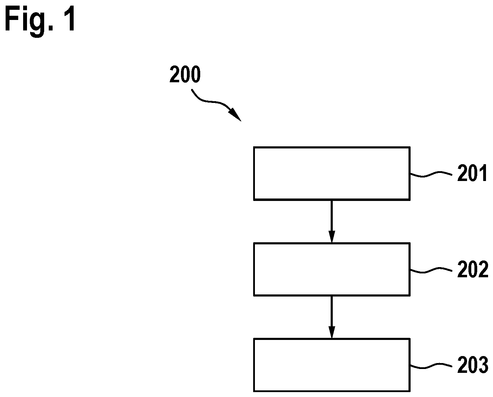

Fig. 1 shows a method 200 for controlling a building management system, hereinafter referred to as BMS 1, for a building.

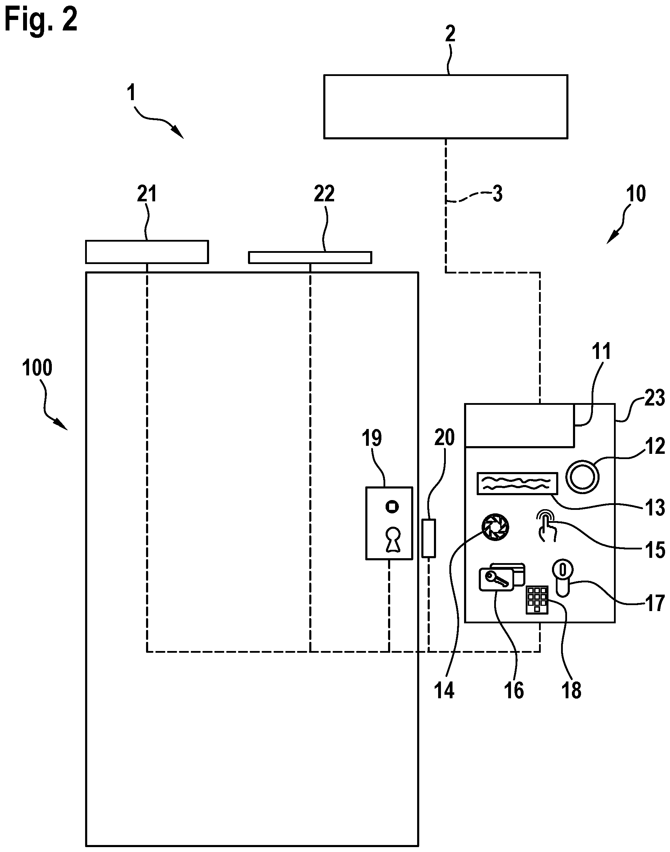

The BMS 1, as is shown in figures 2 to 5, comprises several access gate entities, hereinafter referred to as AGEs 10, wherein each AGE 10 controls at least one access gate 100, in particular a door, a gate, a turnstile, or another barrier of the building. Further, the BMS comprises a BMS controller 2 with a data link 3 to each AGE 10.

The method 200 as shown in Fig. 1 comprises:
Step 201: determining a default AGE-configuration for each AGE 10 within the BMS controller 2.
Step 202: monitoring, by the BMS-controller 2, the AGEs 10 for detecting possible dysfunctions at the AGEs 10, and
Step 203: if a predetermined dysfunction is detected at one of the AGEs 10, hereinafter referred to as first AGE 10, changing by the BMS-controller at least another one of the AGEs 10, hereinafter referred to as second AGE 10, from the default AGE-configuration to a special AGE-configuration.

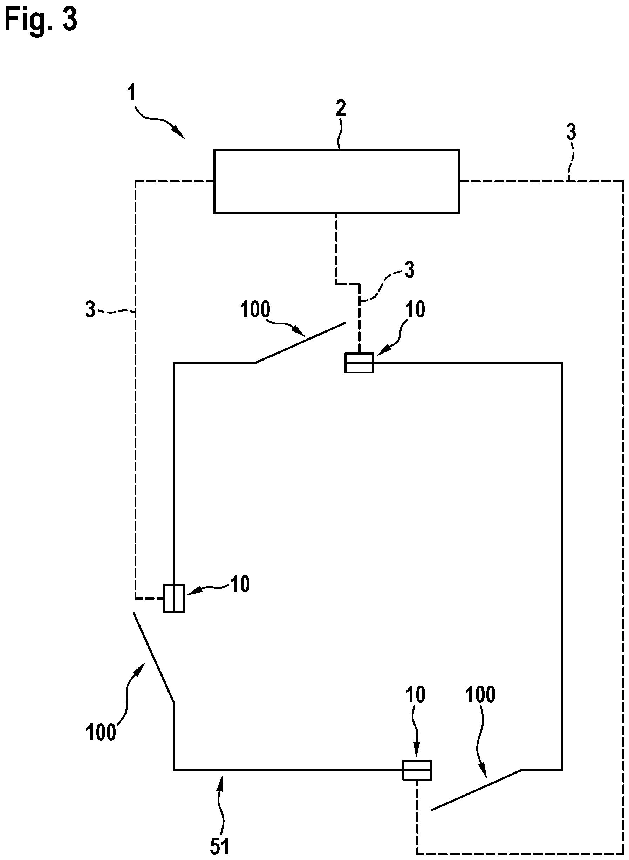

Fig. 2 shows the BMS 1, adapted to running the inventive computer program and to carry out at least the method steps 201, 202 and 203. As Figures 3 to 5 illustrate, the BMS 1 may comprise multiple AGEs 10 and correspondingly multiple access gates 100. Fig. 2 shows the possible structure of these AGEs 10, where, for the sake of simplicity, only one AGE 10 is shown in Fig. 2.

The dysfunction of the AGE 10 is detected by detecting that at least one component of the AGE 10 is dysfunctional. The AGE 10 can comprise following components, as explained in the general part of the description. The AGEs 10 of the BMS 1 can have different components, which means that not all AGEs 10 of the BMS 1 have to have the same components:

AGE controller (11), and/or an emergency open button (12), and/or a touch display (13) configured for password and/or gesture code input, and/or means for biometrical identification - preferably a camera (14) and/or a fingerprint sensor (15), and/or an electronic-key reader (16), and/or a mechanical key operated switch (17), and/or a keypad (18) configured for password input, and/or a door lock (19), and/or a door buzzer (20), and/or a door closer (21), and/or a door drive, and/or a fire detector (22). The door drive is not explicitly shown, but would be on a similar position as the door closer 21.

As shown in Fig. 2, some of the components can be arranged in a terminal housing 23 of the AGE.

Fig. 3 shows a setup of the BMS 1 with three AGEs 10 as an example; all in the border of a first zone 51. The BMS controller 2 is connected to all AGEs 10 via the data link 3.

For example: One of the AGEs 10 in Fig. 3 can be the first AGE 10 having a dysfunction. The other two AGEs can be the second AGEs 10. If detected at the first AGE 10 - as the predetermined dysfunction - that the access gate 100 controlled by first AGE 10 can no longer be opened, the second AGEs 10 (or at least one of the second AGEs 10) are changed from the default AGE-configuration to the special AGE-configuration, causing the second AGEs 10 to activate a passage function, in particular an emergency exit function.

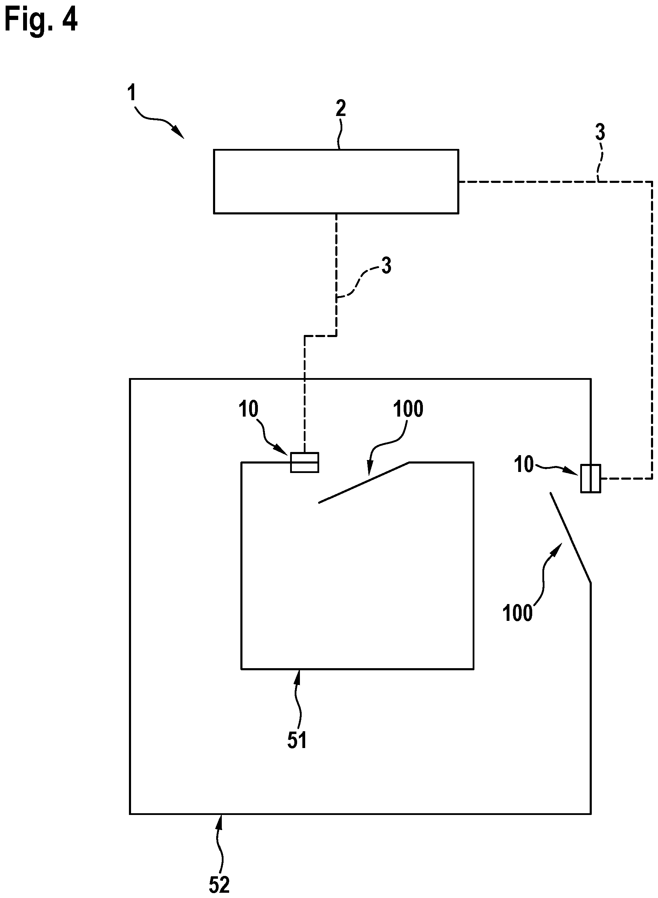

Fig. 4 shows a setup of the BMS 1 with one AGE 10 in the border of the first zone and one AGEs 10 in the border of a second zone 52. The BMS controller 2 is connected to all AGEs 10 via the data link 3. Thereby, the second zone 52 encloses the first zone 51, which makes the zones 51, 52 nested.

For example: In Fig. 4 the AGE 10 in the first zone 51 can be the first AGE 10 having a dysfunction. The other AGE 10 in second zone 52 can be the second AGE 10. If detected at the first AGE 10 - as the predetermined dysfunction - that the access restriction is dysfunctional, the second AGE 10 can be changed from the default AGE-configuration to the special AGE-configuration causing the second AGE 10 to change the access restriction level, in particular to the access restriction level of the first AGE.

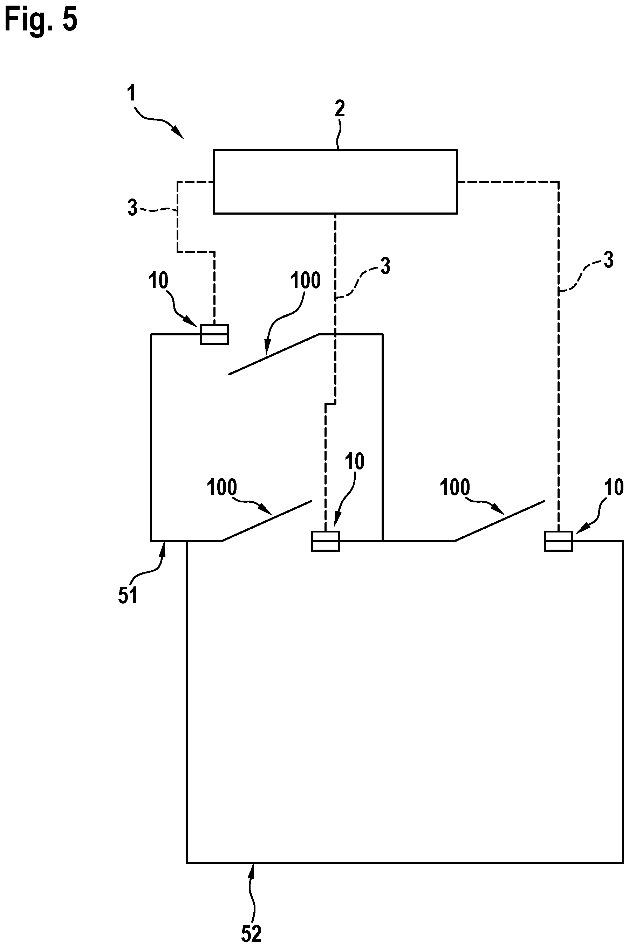

Fig. 5 shows a setup of the BMS 1 with one AGE 10 in the border of the first zone 51 and one AGE 10 in the border of a second zone 52. The first zone 51 and the second zone 52 are adjacent to each. A third AGE 10 connecting both zones 51, 52. The BMS controller 2 is connected to all AGEs 10 via the data link 3.

For example: In Fig. 5, the AGE 10 (uppermost AGE 10 in Fig. 5), which would allow a direct exit from the first zone 51, can be the first AGE 10 having a dysfunction. The other two AGEs 10 can be second AGEs 10. If detected at the first AGE 10 - as the predetermined dysfunction - that the access gate 100 controlled by first AGE 10 can no longer be opened, the second AGEs 10 are changed from the default AGE-configuration to the special AGE-configuration causing the second AGEs 10 to activate a passage function, in particular an emergency exit function. This allows a person escaping from the first zone 51 via the second zone 52.

If the predetermined dysfunction is detected at the first AGE 10, the default AGE-configuration of the first AGE 10 can be changed, in particular by the BMS controller 2, to a fall-back AGE-configuration. This is taken into account in the following example.

A further example: In Fig. 5, the AGE 10 (uppermost AGE 10 in Fig. 5), which would allow a direct entry into the first zone 51, can be the first AGE 10 having a dysfunction. The other two AGEs 10 can be second AGEs 10. If detected at the first AGE 10 - as the predetermined dysfunction - that the access restriction is dysfunctional, at least one of the second AGE 10 can be changed from the default AGE-configuration to the special AGE-configuration causing this second AGE 10 to change the access restriction level, in particular to the access restriction level of the first AGE 10. The first AGE 10 can be changed from the default AGE-configuration to fall-back AGE-configuration causing the first AGE 10 to permanently lock the access gate 100. This ensures that only authorized persons have access to the first zone 51.

In general, the fall-back AGE-configuration can cause the access gate 100 controlled by first AGE 10 to be locked or unlocked, and/or can cause the first AGE 10 to change the access restriction level, and/or can cause the first AGE 10 to issue a visual or audible message, preferable a message related to the dysfunction, more preferable a message including an information for a user how to work around the dysfunction. A device for outputting such message could be e.g. arranged at the terminal housing 23.

The following descriptions of the method and the BMS 1 refer to all setups shown in figures 3 to 5, unless explicitly stated otherwise.

The special AGE-configuration is adapted for the second AGE 10 to compensate the predetermined dysfunction of the first AGE 10, in particular to replace the function of the access gate 100 controlled by first AGE 10 by the access gate 100 controlled by second AGE 10.

The BMS controller 2 can be set in such a way that the special AGE-configuration causes the access gate 100 controlled by second AGE 10 to be locked or unlocked.

The BMS controller 2 can be set in such a way that the special AGE-configuration causes the second AGE 10 to change the access restriction level, in particular by changing the authentication method and/or adding an additional authentication method and/or changing the access-permitted user group.

The BMS controller 2 can be set in such a way that the special AGE-configuration causes the second AGE 10 to issue a visual or audible message, preferable a message related to the dysfunction. A device for outputting such message could be e.g. arranged at the terminal housing 23.

The BMS controller 2 can be set to automatically change the second AGE 10 from the default AGE-configuration to the special AGE-configuration, if detecting the dysfunction of the first AGE 10; preferably if detecting a specific dysfunction from a variety of possible dysfunctions of the first AGE 10.

Thereby, the BMS controller 2 can be set to "fully automatically change the second AGE 10 from the default AGE-configuration to the special AGE-configuration", wherein the BMS controller 2 changes the configuration without any involvement of a person. Further, the BMS controller 2 can be set to "semi-automatically change the second AGE 10 from the default AGE-configuration to the special AGE-configuration", wherein the BMS controller 2 proposes one or more second AGE(s) 10, each with at least one possible special AGE-configuration, for selection by a person.

According to the embodiment, for at least one AGE 10 - which is the "first AGE" if dysfunctional -, at least one further AGE 10 can be predetermined in the BMS controller 2 as "second AGE" with at least one associated special AGE-configuration.

According to the embodiment, for at least one AGE 10 - which is the "first AGE" if dysfunctional -, a plurality of possible dysfunctions can be predetermined in the BMS controller 2, wherein for each of the possible dysfunctions at least one further AGE 10 can be predetermined in the BMS-controller 2 as "second AGE", preferably with at least one associated special AGE-configuration per second AGE 10.

According to the embodiment, (case A) if a predetermined dysfunction of a first kind is detected at the first AGE 10, the BMS controller 2 can change the second AGE 10 from the default AGE-configuration to the special AGE-configuration, and (case B) if a predetermined dysfunction of a second kind is detected at the same first AGE 10 - same as in case A -, the BMS-controller can perform the following:

BMS controller 2 can change a different second AGE 10 - different from the one in case A - from the default AGE-configuration to a special AGE-configuration, and/or can change the same AGE 10 - same as in case A - from the default AGE-configuration to a different special AGE-configuration - different from the one in case A.

According to the embodiment, the computer program defined defined above can be executed on the BMS controller 2. The program comprising instructions which, when the program is executed on the BMS controller 2, cause the BMS controller 2 to carry out the inventive method.

### List of reference signs

1 building management system (BMS)
2 BMS controller
3 data links
10 access gate entities (AGE)
11 AGE controller
12 emergency open button
13 touch display
14 camera
15 fingerprint sensor
16 electronic-key reader
17 mechanical key operated switch
18 keypad
19 door lock
20 door buzzer
21 door closer
22 fire detector
23 terminal housing
51 1^{st} zone
52 2^{nd} zone
100 access gate
200 method
201 determine a default AGE-configuration
202 monitoring the AGEs
203 changing AGE from the default AGE-configuration to a special AGE-configuration

## Claims

1. A method (200) for controlling a building management system, hereinafter referred to as BMS (1), for a building, the BMS (1) comprising:
• several access gate entities, hereinafter referred to as AGEs (10); each AGE (10) controlling at least one access gate (100), in particular a door, a gate, a turnstile, or another barrier;
• and a BMS controller (2) with a data link (3) to each AGE (10), the method (200) comprising:
• determining (201) a default AGE-configuration for each AGE (10) within the BMS controller (2),
• monitoring (202), by the BMS-controller (2), the AGEs (10) for detecting possible dysfunctions at the AGEs (10), and
• if a predetermined dysfunction is detected at one of the AGEs (10), hereinafter referred to as first AGE (10), changing (203) by the BMS-controller at least another one of the AGEs (10), hereinafter referred to as second AGE (10), from the default AGE-configuration to a special AGE-configuration.

2. The method of claim 1, wherein the special AGE-configuration is adapted for the second AGE (10) to compensate the predetermined dysfunction of the first AGE (10), in particular to replace the function of the access gate (100) controlled by first AGE (10) by the access gate (100) controlled by second AGE (10).

3. The method of any preceding claim, wherein the special AGE-configuration causes:
• the access gate (100) controlled by second AGE (10) to be locked or unlocked,
• and/or the second AGE (10) to change the access restriction level, in particular by changing the authentication method and/or adding an additional authentication method and/or changing the access-permitted user group,
• and/or the second AGE (10) to issue a visual or audible message, preferable a message related to the dysfunction.

4. The method of any preceding claim, wherein the BMS controller (2) automatically changes the second AGE (10) from the default AGE-configuration to the special AGE-configuration, if detecting the dysfunction of the first AGE (10); preferably if detecting a specific dysfunction from a variety of possible dysfunctions of the first AGE (10).

5. The method of claim 4, wherein automatically means:
• "fully automatically", wherein the BMS controller (2) changes the configuration without any involvement of a person;
• or "semi-automatically", wherein the BMS controller (2) proposes one or more second AGE(s) (10), each with at least one possible special AGE-configuration, for selection by a person.

6. The method of any preceding claim, wherein
• for at least one AGE (10) - which is the "first AGE" if dysfunctional -, at least one further AGE 10 is predetermined in the BMS controller (2) as "second AGE" with at least one associated special AGE-configuration,
• and/or for at least one AGE (10) - which is the "first AGE" if dysfunctional -, a plurality of possible dysfunctions are predetermined in the BMS controller (2), wherein for each of the possible dysfunctions at least one further AGE 10 is predetermined in the BMS-controller (2) as "second AGE", preferably with at least one associated special AGE-configuration per second AGE (10).

7. The method of any preceding claim, wherein
• (case A) if a predetermined dysfunction of a first kind is detected at the first AGE (10), the BMS controller (2) changes the second AGE (10) from the default AGE-configuration to the special AGE-configuration,
• (case B) and if a predetermined dysfunction of a second kind is detected at the same first AGE (10) - same as in case A -, the BMS-controller (2):
∘ changes a different second AGE (10) - different from the one in case A - from the default AGE-configuration to a special AGE-configuration, and/or
∘ changes the same AGE (10) - same as in case A - from the default AGE-configuration to a different special AGE-configuration - different from the one in case A.

8. The method of any preceding claim, wherein, if detected at the first AGE (10) - as the predetermined dysfunction - that the access gate (100) controlled by first AGE (10) can no longer be opened, the second AGE (10) is changed from the default AGE-configuration to the special AGE-configuration causing the second AGE (10) to activate a passage function, in particular an emergency exit function.

9. The method of any preceding claim, wherein, if detected at the first AGE (10) - as the predetermined dysfunction - that the access restriction is dysfunctional, the second AGE (10) is changed from the default AGE-configuration to the special AGE-configuration causing the second AGE (10) to change the access restriction level, in particular to the access restriction level of the first AGE.

10. The method of any preceding claim, wherein the dysfunction of the AGE (10) is detected by detecting that at least one component of the AGE (10) is dysfunctional; in particular, wherein the AGE (10) comprises as components with potential dysfunctionality:
• an AGE controller (11),
• and/or an emergency open button (12),
• and/or a touch display (13) configured for password and/or gesture code input,
• and/or means for biometrical identification - preferably a camera (14) and/or a fingerprint sensor (15),
• and/or an electronic-key reader (16),
• and/or a mechanical key operated switch (17),
• and/or a keypad (18) configured for password input,
• and/or a door lock (19),
• and/or a door buzzer (20)
• and/or a door closer (21),
• and/or a door drive
• and/or a fire detector (22).

11. The method of any preceding claim, wherein, if the predetermined dysfunction is detected at the first AGE (10), the default AGE-configuration of the first AGE (10) is changed, in particular by the BMS controller (2), to a fall-back AGE-configuration.

12. The method of claim 11, wherein the fall-back AGE-configuration causes: the access gate (100) controlled by first AGE (10) to be locked or unlocked, and/or the first AGE (10) to change the access restriction level, and/or the first AGE (10) to issue a visual or audible message, preferable a message related to the dysfunction, more preferable a message including an information for a user how to work around the dysfunction.

13. The method of any preceding claim, wherein
• the first AGE (10) is located in the border of a first zone (51) of the building and the second AGE (10) is located in the border of a second zone (52) of the building; preferably wherein the first zone (51) and the second zone (52) are adjacent to each other or the second zone (52) encloses the first zone (51),
• or wherein the first AGE (10) and the second AGE (10) are located in the border of the same zone (51) of the building.

14. Computer program comprising instructions which, when the program is executed on the BMS controller (2), cause the BMS controller (2) to carry out the method of any preceding claim,
• wherein the BMS controller (2) is part of a building management system, hereinafter referred to as BMS (1), for a building,
• wherein the BMS (1) comprising several access gate entities, hereinafter referred to as AGEs (10); each AGE (10) controlling at least one access gate (100), in particular door, gate, turnstile, or another barrier;
• and wherein the BMS-controller (2) has a data link (3) to each AGE (10),
in particular the computer program comprising instructions which, when the program is executed on the BMS controller (2), cause the BMS controller (2) to:
• determine (201) the default AGE-configuration for each AGE (10),
• monitoring (202) the AGEs (10) for detecting possible dysfunctions of the AGEs (10), and
• if a predetermined dysfunction is detected at one of the AGEs (10), hereinafter referred to as first AGE, changing ()203 at least another one of the AGEs (10), hereinafter referred to as second AGE, from the default AGE-configuration to a special AGE-configuration.

15. Building management system, hereinafter referred to as BMS 1, adapted to carry out the method of any one of claims 1 to 13, the BMS (1) comprising:
• several access gate entities , hereinafter referred to as AGEs (10); each AGE (10) controlling, preferably comprising, at least one access gate ()100, in particular door, gate, turnstile, or other barrier;
• and a BMS controller (2) with a data link (3) to each AGE (10), the BMS-controller (2) is adapted to:
• determine (201) a default AGE-configuration for each AGE (10),
• monitoring (202) the AGEs (10) for detecting possible dysfunctions of the AGEs (10), and
• if a predetermined dysfunction is detected at one of the AGEs (10), hereinafter referred to as first AGE, changing (203) at least another one of the AGEs (10), hereinafter referred to as second AGE, from the default AGE-configuration to a special AGE-configuration.
